(19) **Europäisches Patentamt / European Patent Office / Office européen des brevets**

(11) **EP 2 439 315 A2**

(12) **EUROPEAN PATENT APPLICATION**
published in accordance with Art. 153(4) EPC

(43) Date of publication:
**11.04.2012 Bulletin 2012/15**

(51) Int Cl.:
**C25C 1/20** (2006.01)

(21) Application number: **09773771.2**

(22) Date of filing: **02.07.2009**

(86) International application number:
**PCT/MX2009/000062**

(87) International publication number:
**WO 2010/002235 (07.01.2010 Gazette 2010/01)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.07.2008 MX MX08008671**

(71) Applicants:
  • **Universidad Autónoma Metropolitana C.P. 14387 Mexico D.F. (MX)**
  • **Servicios Industriales Peñoles, S.a. De C.v. México D.F. (MX)**

(72) Inventors:
  • **GONZÁLEZ MARTÍNEZ, Ignacio C. P. 09340. México D.F. (MX)**

  • **NAVA MONTES DE OCA, José Luis Delegación Tialpan C.P. 14387 Mexico (MX)**
  • **BENAVIDEZ PÉREZ, Ricardo C P. 64960. Monterre Nuevo León (MX)**
  • **RECÉNDIZ MEDINA, Alejandro C. P. 09800. México D.F. (MX)**
  • **BUTRÓN VARGAS, Edgar Jesús C. P. 55140. Estado de México (MX)**
  • **LARA VALENZUELA, Carlos C. P. 64920. Monterre Nuevo León (MX)**

(74) Representative: **Torner Lasalle, Elisabet et al Torner, Juncosa I Associats, S.L. C/Gran Via de les Corts Catalanes, 669bis 1è 2o 08013 Barcelona (ES)**

(54) **FILTER-PRESS-TYPE ELECTROCHEMICAL REACTOR FOR RECOVERING GOLD (AU) AND SILVER (AG) VALUES IN POWDER FORM**

(57) The invention is applicable to the recovering gold (Au) and silver (Ag) values resulting from the leaching of mined materials with which in the cathode, a process of reduction of the values of Au (I) and Ag (I) dissolved in a leaching liquor is performed; and in the anode, an oxidation reaction is performed, jointly taking advantage of the employed energy and using for the electro-recovering of non-adhesive deposits values from Ag (I) and Au (I) values an expanded metal three-dimensional cathode made of piles of stainless steel.

**Fig. 4**

**Description**

Field of the invention

The present invention is related to the mining industry, and specifically refers to a filter-press-type electrochemical reactor for recovering gold (Au) and silver (Ag) values from solutions resulting from the leaching of mined materials with which in the cathode, a process of reduction of the values of Au (I) and Ag (I) dissolved in a leaching liquor is performed; and in the anode, an oxidation reaction is performed, jointly taking advantage of the energy which is employed.

Background of the invention

Nowadays recovering Ag(I) and Au(I) values from aqueous solutions, resulting from a leaching process, is carried out using carburizing processes, in which the values are reduced on metallic zinc. Subsequently, the material containing zinc-Au-Ag is utilized as an anode, on the one hand, to dissolve the gold and silver, selectively, while the dore (Au-Ag) is recovered in the cathode.

It is important to mention that existing documentation on recovering gold and silver, originating from leaching processes in electrochemical reactors is very scarce. However, in previous works, Mexican patent MX 250,894 (Lapidus-Lavine, 2007), a process using controlled electro-oxidation of thiourea solutions to form in-situ an oxidizing agent capable of oxidizing and dissolving-extracting gold and silver from the raw materials in which they are contained and electrolytic recovery of said metals in a single process is protected. Nevertheless, in this work electro-recovery of the values is only mentioned, without going into further detail with a description of an appropriate electrochemical reactor, nor the way in which metal deposits are generated.

Various electrochemical cells (also called electrochemical reactors) have been described and are presently in use which allow for removing heavy metals in a solution by means of electro-deposits such as the case of the U.S. patent application No. 2008/0006538 (Canales, 2008), in which metallic copper deposits coming from the dissolution of minerals containing copper are produced, or solutions containing heavy metals susceptible to removal, These deposits are generated in batches in cells whose configuration of electrodes is in the form of bi-dimensional plates. This geometry of electrodes provides small areas when compared to those offered through the use of three dimensional electrodes.

Another patent document, U.S. patent application No. 2006/0016697 (Stanley, 2006) has to do with the generation of metallic copper from solutions containing Cu(II). This process uses a parallel flow packed bed electrochemical reactor, that is one in which the electrolyte flows parallel to the fluid channels generated between the three dimensional anode and the cathode. This cell generates the electro-deposit of powdered copper, by means of the application of a flow density and by injecting air which promotes mass transfer to form powders. These powders are detached by the gravity of the cathode and are deposited in the conical bottom of the drainage reactor. This reactor is limited by the fact that the mass transfer must be assisted by the injection of air in order to generate powder.

There are works on filter-press-type electrochemical reactors for multiple applications, for example the work presented in the publication of international patent application WO 2000/50650 (Henry, 2000), uses this cell for leaching $MnO_{2(s)}$, in which pulp containing manganese dioxide, which is passed through a corrugated mesh acting as an anode, in which the oxide is stripped from the manganese, in order to be incorporated in its ionic form into a solution is described. However, in the cell no metallic deposits are generated by electro-reduction. U.S. Patent No. 5536387 (Hill, 1996) is related to the use of a filter-press-type electrochemical reactor equipped with three dimensional platinized corrugated titanium electrodes, with a platinum electro catalyst held over titanium, into which solutions of Ag(I) in mainly thiosulphate and tetrathionate mediums. These species which contain sulfur are reduced in the cathode, chemically forming silver sulphide in the solution which is also precipitated; in this cell silver deposits are not generated by electro-reduction either.

International patent application WO 2004/079840 (Larson, 2004), is related to an electrochemical reactor with cross flow tridimensional electrodes, for multiple applications, foremost among those being electrodeposits of silver from cyanided solutions. However, in this reactor silver deposits remain adhered to the three dimensional electrode employed as a cathode.

Objectives of the invention

The objective of the present invention is to provide a filter-press-type electrochemical reactor for obtaining Au and Ag in powder form, from solutions resulting from leaching mining materials.

Another objective of the present invention is to provide an electrochemical reactor for obtaining Au and Ag in powder form, in the cathode of which a reduction reaction of the Au(I) and Ag(I) values dissolved in leaching liquor takes place.

Still another objective of the present invention is to provide an electrochemical reactor for obtaining Au and Ag in powder form; in whose anode an oxidation reaction takes place, to recover the reagents.

It is still another objective of the present invention to provide an electrochemical reactor for obtaining Au and Ag in powder form, which allows for the optimizing the use of the energy employed in both the anodic and cathodic compartments jointly.

An additional objective of the present invention is to provide an electrochemical reactor to obtain Au and Ag in powder form, which does not require stopping the equipment or additional elements in order to remove said powder from the electrodes.

Summary of the invention

The present invention is related to a filter-press-type electrochemical reactor for recovering gold (Au) and silver (Ag) values dissolved in a fluid obtained from leaching mining material, obtained, for example, by way of the use of thiourea, the reactor being of the cross-flow type, which consists of a cathodic compartment and an anodic compartment, separated by an anionic membrane, each compartment includes an electrode, thus forming an electrolytic cell. The electrodes used as anode/cathode are made of different materials, being chosen for the cathodic compartment an electrode composed of a pile of stainless steel meshed, which product a reduction reaction in the dissolved metallic values and in the anodic compartment a material which allows an oxidation reaction, such as thiourea or water.

The material reactor of the present invention is characterized by consisting of a cathode made up of a pile of stainless steel meshes, with a large area and under hydrodynamic conditions and density of controlled current, as is described later on, which allow for obtaining non-adhesive deposits in powder form, avoiding the necessity of opening the cell in order to obtain the product.

The cell employs two flow distribution channels, characterized by having a grooving, in the entrance as well as the exit of the electrolytic cell, which avoid diversions in the ideality of the flow, such as the formation of preferential paths, short circuits, recirculation or dead zones. Proper hydrodynamic functioning within the cell assures the formation of non-adhesive metallic powder with the characteristic of exiting due to the speed of the flow.

Brief description of the drawings

The illustrations which are described below accompany the present description as a means for better understanding the characteristics of the invention.

Figure 1 is a schematic representation of a front view of the filter-press-type electrochemical reactor of the present invention. The dotted lines shown in the figure represent the distribution of the fluid within the cell.
Figure 2 illustrates an exploded view of the filter-press-type electrochemical reactor of the present invention, showing its constituent elements.
Figure 3a shows the mesh used in the cathodic compartment of the reactor of the invention.
Figure 3b shows a detail of the configuration of the mesh of Figure 3a.
Figure 4 shows the fluid distributor employed in the electrochemical cell.
Figure 5 is a scheme of a system for the recovery of metallic values which is employed by the filter-press-type electrochemical reactor of the present invention.
Figure 6 is a graph which shows the decline in the concentration of metals contained in the leaching liquor and which are electro-reduced in the cathodic chamber of the filter-press-type electrochemical reactor, obtained in the application example.

Detailed description of the invention

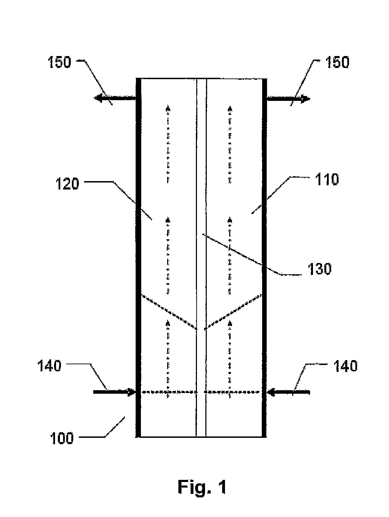

The present invention refers to an electrochemical reactor or electrochemical cell, of the filter-press-type with cross-over flow, shown in Figure 1 with the numeral 100, which consists of a cathodic compartment 110 and an anodic compartment 120, separated by an anionic membrane 130 of the kind for example of membranes sold under the name of NEOSEPTA™ (AMX), each one of the compartments includes an electrode, thus conforming an electrolytic cell and the electrodes being employed as anode/cathode, each of a different material. The fluid entrance is on the bottom part 140 and the fluid exit is on the top part 150 in both compartments 110, 120 of the electrochemical cell 100. In this electrochemical reactor 100, the solution circulates through each of the anodic 120 and cathodic 110 compartments.

The optimum hydrodynamic conditions in the cathode are in the range of $500 \leq Re \leq 700$, where Re is the Reynolds number defined as :

$$Re = \frac{ud}{(1-\varepsilon)\,\upsilon}$$

where

u is the average fluid velocity

d is the particle size of the three dimensional electrode

$\varepsilon$ is the empty fraction, and

u is the kinematic viscosity;

In this interval of Re the formation of metallic powders that are detached and transported outside the cell by the inertia of the fluid that crosses is favored. Meanwhile in the anodic compartment the Re is in the range of $100 \leq Re \leq 200$.

The concentration of gold and silver in the solution to be treated should be about 1000 ppm to 50 ppm, since outside these conditions the recovery of the Au and Ag values is no longer efficient.

It is important to point out that the difference in Reynolds values between the cathodic 110 and anodic 120 compartments has been established in the aforementioned values, since these conditions favor electro-reduction of metals and oxidation.

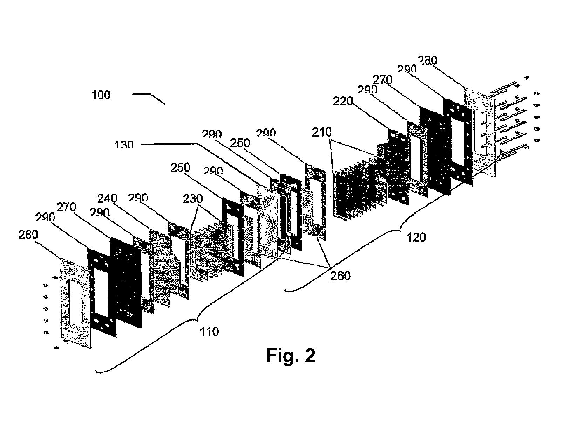

In reference to Figure 2, for the cathodic compartment 110 of the electrochemical reactor 100 of this invention, and electrode composed of a pile of stainless steel meshes 230 is chosen, in order to produce the reduction of Ag(I) and Au(I) in the form of non-adhesive metallic powders which are removed by the velocity of the fluid which cross through the cell; and for the anodic compartment 120, a material which allows for an oxidation reaction is chosen, such as the oxidation of thiourea or water to form oxygen. A reactor 100 which includes 10 platinized titanium meshes 210 held over a titanium plate 220, also platinized, from here on called "collector a" is shown In Figure 2; 7 stainless steel meshes 230 held over a stainless steel plate 240, from here on referred to as "collector b" are also shown.

"Collector a" 220 as well as "collector b" 240 promote a homogenous distribution of the flow over the meshes and along the cell. Each compartment, anodic 120 and cathodic 110, includes a fluid distribution channel 250, and a turbulence producer 260 which prompts turbulence within the channel of the electrochemical cell in order to avoid air bubbles forming within the system which would negatively affect the efficiency of the cell. The geometry of the electrodes employed in the cell 100 favor the generation of micro-turbulences within the cell 100.

The cell 100 also includes two polypropylene plates 270 at each end, which function as frame, framework or chassis, and two frontal plates 280 made of stainless steel 316-L which act as structural supports. The assembly of the cell is made up of neoprene seals 290 between each set of components. Polypropylene and neoprene have been chosen because they are chemically stable under the thermodynamic conditions of the dissolutions which enter the electrochemical reactor 100.

The division between the anodic 120 and cathodic 110 compartments is made with an anionic membrane 130, which only allows the migration of anions through it.

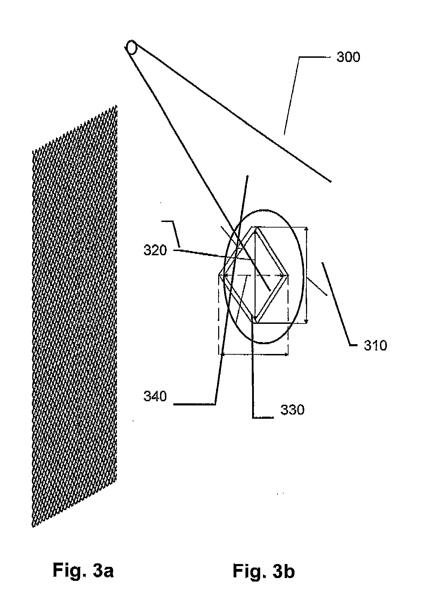

In reference to Figure 3a, it represents one of the stainless steel meshes 230 which are piled up to form the cathode and which are included in the scope of the present invention to show a characteristic rhombus shaped structure.

In Figure 3b an amplified detail of one of the characteristic rhombs which make up this mesh is shown, denoted by number 300, in which the outer height 310 of the rhombus is 1,6 cm, the internal height 320 is 1.4 cm, the external width 330 and the internal width 340 are 0.8 and 0.6 cm, respectively; thus the thickness of the material 350 is 0.1 cm, The specific area ($A_e$) occupied by the electrode in the cathodic channel, defined as $A_e$ = (the area of the surface of the electrode)/(unit of volume), is 320 $m^2 m^{-3}$.

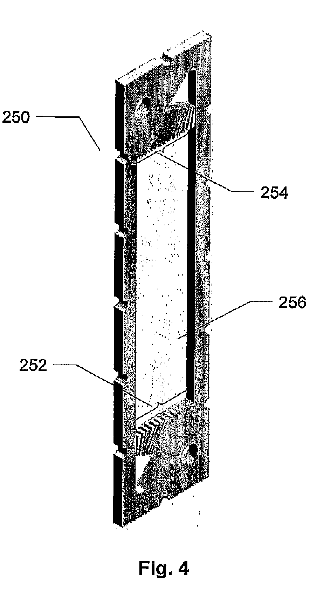

Figure 4 shows the distribution channel 250 used in each of the compartments, anodic 120 and cathodic 110, characterized by presenting a window 256 on the internal part through which the fluid passes along the cell 100. This fluid distribution channel 250 has a characteristic grooving along the window 256 in the entrance 252 as well as in the exit 254 of the fluid, with the width of each groove through which the fluid circulates being preferentially 1 cm, and which permits the uniform distribution of the fluid within the channel.

Sole example: *Electro-recuperation of silver (Ag) from a leaching liquor from a mining concentrate.*

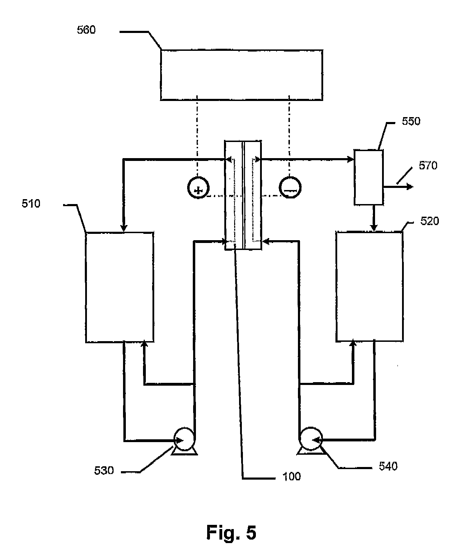

Figure 5 shows the hydraulic and electric circuits of the system for recovering values, used in the filter-press-type electrochemical reactor 100 of the invention, where the storage tanks of the anolyte 510 and the catolyte 520 are recirculated by means of pumps 530 and 540 at a constant fluid velocity. The values of gold and silver in powder form are recovered 570 by means of a filter 550. A direct current rectifier 560 is used to supply power to the electrochemical reactor 100.

The solution used in the example is liquor which is produced by leaching a mining concentrate, with metal dissolved in the concentrations and with the parameters shown in Table 1. The leaching liquor has been previously filtered in order to eliminate suspended particles in the solution. The solution was then fed into the cathodic compartment of the electrochemical cell 100 for the selective recovery of Ag values.

Table 1. Parameters and Concentrations of the Leaching Liquor of the example, prior to electrolysis

|  | Initial |
|---|---|
| Conductivity/mS cm$^{-1}$ | 128 |
| Ag, ppm | 700 |
| Fe, ppm | 440 |
| Zn, ppm | 70 |
| Pb, ppm | 10 |
| Cu, ppm | 60 |
| pH$_{cat}$ | 0.6 |
| T$_{cat/°C}$ | 21 |
| * J=-100 A m$^{-2}$, A=0.3 m$^2$, Re=500 | |

Electrolysis was carried out in the circuit represented in Figure 5, employing the filter-press-type electrochemical reactor 100 of the invention. With reference to Figure 2, said reactor consists of:

- 10 expanded metal meshes made of platinized titanium (TI/Pt), with a length of 49.8 cm, a width of the mesh of 12.4 cm, a thickness of 1mm, employed as anodes, with a total area of 0.43 m$^2$; and
- 7 stainless steel meshes, with similar geometric characteristics, which are employed as cathodes, with an area of the electrode of 0.3 m$^2$.

To carry out electrolysis, a cathodic current density of -100 A m$^{-2}$ was applied, with a Reynolds of 500, during 45 minutes.

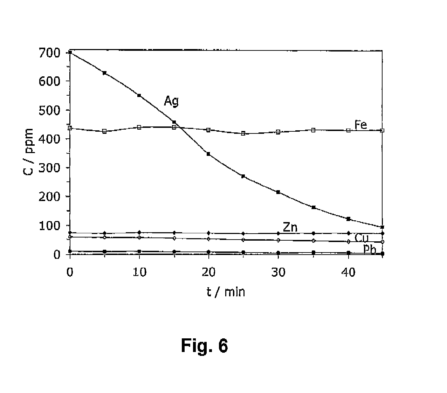

In Figure 6 shows the follow-up of the kinetic recuperation of Ag (I) values, in terms of the concentration of the metallic ions present, as a function of the time of electrolysis. By analyzing this Figure an exponential fall in the concentration of silver can be observed, characteristic of a controlled process for transporting mass, which gives way to the generation of silver dendrite which detaches from the electrode. It is important to point out that the other metals present in the liquor, are not susceptible to being reduced since their concentration remains constant. The latter shows the selectivity of the electro-deposit process, which is reached in the three dimensional electrodes of the reactor of the invention, at the conditions of selected current density and Reynolds number previously mentioned.

In Table 2 it can be seen that at the end of electrolysis the pH of the solution as well as the conductivity remained almost constant. On the other hand, it is important to point out that the process used as an example of application of the present invention for selective recovery of gold and silver values, under the above mentioned experimental conditions, makes the use of the electrochemical cell for electro-generation of metallic powders attractive. The latter renders unnecessary to open the cell to remove the recovered metals with this process.

Table 2. Parameters and concentrations in the fluid before and after electrolysis

|  | Initial | At the end of electrolysis* |
|---|---|---|
| Conductivity/mS cm$^{-1}$ | 128 | 127 |
| Ag, ppm | 700 | 95 |
| Fe, ppm | 440 | 400 |
| Zn, ppm | 70 | 70 |
| Pb, ppm | 10 | 5 |
| Cu, ppm | 60 | 50 |
| pH$_{cat}$ | 0.6 | 0.5 |
| T$_{cat/°C}$ | 21 | 32 |
| *J= -100 A m$^{-2}$, A= 0.3 m$^2$, Re=500 | | |

Another characteristic which makes this electrolytic cell attractive is that while in the cathodic compartment recovery of these metals is taking place, in the other compartment an oxidation reaction is taking place to generate some reagent of interest, globally taking advantage of the electric energy administered to the cell.

The reactor of the present invention has been sufficiently described so that a person with average knowledge of the field may reproduce it and obtain the results described and illustrated. However, if a person knowledgeable in the art can make modifications not described in the present document, and if for the application of these modifications, the material claimed in the following claims is required, said structures are understood to be within the scope of the present Invention.

Having described in detail our invention, we consider it novel and claim as our exclusive property the contents of the appended clauses.

**Claims**

1. A filter-press-type electrochemical reactor, which consists of an anodic compartment and a cathodic compartment separated by a membrane, a first electrode which acts as an anode within the anodic compartment and a second electrode which acts as a cathode within the cathodic compartment, where said reactor is **characterized by** employing for the electro-recovery of non-adhesive metallic deposits, from Ag(I) and AU(I) values, a three dimensional expanded metal cathode made of piles of stainless steel.

2. The electrochemical reactor of claim 1, **characterized by** the fact that said three dimensional expanded metal cathode is made up of various stainless steel meshes.

3. The electrochemical reactor of claim 2, **characterized by** the fact that the expanded metal cathode made of stainless steel has a specific area of 320 $m^2$ $m^{-3}$.

4. The electrochemical reactor of claim 1, **characterized by** the fact that the stainless steel mesh used in the cathode is rhombic in shape and that each rhombus is taller than it is wide.

5. The electrochemical reactor of claim 2, **characterized by** the fact that various meshes of said tridimensional cathode made of expanded metal are held up by a stainless steel plate, which permits the uniform distribution of the electric current over the mesh.

6. The electrochemical reactor of claim 1, **characterized by** the fact that it includes fluid distributors in each anodic and cathodic compartment of the cell, said fluid distributors are made up of a frame which defines a central window for the flow of the fluid, and in which said window has a grooving, on the inferior edge or entrance for the fluid and on the upper edge or exit for the fluid, which makes for uniform distribution of the fluid, and facilitates the output of the electro-generated metallic powder.

7. The electrochemical reactor of claim 1, **characterized by** the fact that the optimum conditions of current density are in the range of $80 \leq J \leq 120$ A $m^{-2}$.

8. The electrochemical reactor of claim 1, **characterized by** the fact that in order to obtain the non-adhesive powder of Au-Ag, the hydrodynamic characteristics in the cathode should be in the range of $500 \leq Re \leq 700$.

Fig. 1

Fig. 2

300

320

310

340

330

**Fig. 3a**          **Fig. 3b**

250

254

256

252

**Fig. 4**

**Fig. 5**

**Fig. 6**

**EP 2 439 315 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- MX 250894, Lapidus-Lavine
- US 20080006538 A, Canales
- US 20060016697 A, Stanley
- WO 200050650 A, Henry
- US 5536387 A, Hill
- WO 2004079840 A, Larson